# NOUVEAU FASCICULE DE BREVET EUROPEEN

(11) **EP 0 169 954 B2**
(45) Date de publication et mention de la décision concernant l'opposition: **06.09.1995**
(45) Mention de la délivrance du brevet: 28.12.1988
(21) Numéro de dépôt: 84401584.2
(22) Date de dépôt: 27.07.1984
(51) Int. Cl.: G09B 29/10

(54) **Systèmè électronique de guidage et d'information pour la circulation**
Elektronisches Navigations- und Informationssystem für den Verkehr
Electronic information and navigation system for traffic

(43) Date de publication de la demande: 05.02.1986
(73) Titulaire: Jodon de Villeroche, Gérard, F-75116 Paris (FR)
(72) Inventeur: Jodon de Villeroche, Gérard, F-75116 Paris (FR)
(74) Mandataire: Laget, Jean-Loup

(56) Documents cités:
- EP-A- 0 027 232
- FR-A- 2 448 202
- US-A- 3 522 664
- US-A- 4 481 584

## Description

L'invention concerne un système électronique de guidage simple, optimisé et complet, pour la circulation, notamment urbaine et routière, pour remplacer les opérations quotidiennes de tout conducteur de véhicule obligé pour se repérer et se guider de lire une carte ou un plan.

Ce système remplace la lecture fastidieuse d'une carte par un déroulement sur écran d'un itinéraire schématisé au fur et à mesure du franchissement par l'utilisateur des tronçons de son parcours. Il remplace les cartes et les plans sur papier, mais aussi coordonne, sur la seule initiative du conducteur, l'obtention d'informations culturelles, municipales, de prévention ou commerciales spécifiques à son parcours, en se substituant également à la lecture de guides spécialisés, de livres, de journaux et même d'informations qui, bien qu'utiles, ne peuvent aujourd'hui lui parvenir. Il comble un vide de communication, individualisé à un parcours, important pour la sécurité et pour le commerce.

L'invention est aussi susceptible de s'appliquer à la navigation maritime, fluviale ou aérienne, ainsi qu'au contrôle de process, à l'entraînement, à la formation, à l'enseignement et au tourisme.

Actuellement, on dispose pour se diriger dans une aire géographique donnée de cartes routières ou de guides urbains. Les cartes routières ne comportent pas d'index alphabétique de localité desservies par les routes, et il faut parfois chercher longtemps avant de trouver sa localité de destination. En ce qui concerne les guides urbains l'index existe, mais il faut aussi se reporter au plan pour essayer de définir son itinéraire en tenant compte d'informations qui y figurent, comme les sens uniques par example, ou en comparant visuellement un itinéraire par rapport à un autre. Dans les deux cas, il faut repérer sur le plan ou la carte son point de départ et son point d'arrivée, puis choisir un itinéraire avec la seule connaissance des informations d'un document de papier, muet par ailleurs, c'est-à-dire sans avoir la possibilité de tenir compte de beaucoup d'autres données, périodiques, comme un jour de marché dans une rue par exemple, ou temporaires, comme des travaux de voirie, ou plus générales, d'ordre culturel par exemple.

Le conducteur d'un véhicule est aujourd'hui souvent obligé de suivre du doigt son itinéraire sur son plan ou sa carte, ou de faire appel à un navigateur, au fur et à mesure du franchissement des tronçons de son parcours. Souvent aussi le conducteur est oblité de demander son chemin. Il reçoit alors des instructions d'aller tout droit, de tourner par exemple à la troisième à gauche, puis à la première à droite, etc.

D'autre part, la personne qui se déplace dans cette même aire géographique n'est susceptible de faire des interrelations d'information entre les noms des voies, des sites, et des lieux qu'elle côtoie, qu'avec une information antérieurement mémorisée par elle, ou qu'elle trouve dans des guides, des livres ou des journaux, sans cependant les avoir à sa disposition dans son déplacement. Le conducteur peut s'intéresser dans le même temps à ce qu'il voit, et s'il le peut, interroger l'indigène sur la date de construction d'un monument ou l'adresse d'un restaurant proche. S'il ne lui est pas répondu, il sera en manque d'information. Par ailleurs, il peut ne plus se rappeler la date de naissance de Fleming, l'inventeur de la penicilline, bien qu'il se trouve dans la rue qui porte son nom, ou ne pas savoir reconnaître le siècle de construction d'une église, tout en passant devant, ou ignorer en rentrant dans une ville combien il y a d'habitants, ou qu'un village, qu'il aimerait bien traverser, s'enorgueillit aussi du taux peu élevé de ses impôts, ou encore qu'un magasin fait une publicité intéressante. La radio qu'il écoute ne diffuse pas cette sorte d'information, et ne peut avoir de relation directe avec le déplacement propre accompli.

Il faut dire aussi qu'aujourd'hui, lorsque qu'un conducteur demande un renseignement et enregistre mentalement les opérations et tournants qu'il doit effectuer, il en perd souvent le principal et est obligé de redemander conseil. La présente invention, qui fait appel à l'appréciation du conducteur pour évaluer et comparer les tronçons réels de son parcours à leur représentation schématique n'évite pas tous les cas de perte d'orientation. Il lui suffit alors de repérer le nom de la voie dans laquelle il se trouve et de l'enregistrer comme un point de départ nouveau pour que la représentation de l'itinéraire à suivre lui soit à nouveau donnée. De la même façon très simple, sa localisation de départ sera enregistrée par orientation du véhicule dans une zone non urbaine, ou par simple référence au nom de la voie dans laquelle il se trouve et au sens croissant des numéros pairs ou impairs de cette voie, le système suivant l'invention déterminant où se trouve le véhicule et dans quel sens il doit se déplacer, la précision du déplacement étant à proportion des informations enregistrées par l'appareil de codage.

Les types de guide électronique de véhicule connus ne répondent pas à ces multiples services dont fait état l'invention. Ils n'ont pas la même simplicité et la même universalité.

Ils font en général intervenir des techniques sophistiquées de présentation de cartes complètes sur de écrans, au lieu de se limiter à un itinéraire suivi qui concerne seul l'utilisateur. Ils comportent des moyens importants de contrôle de déplacement du véhicule par rapport à la carte; ils sont donc très chers, et pas plus commodes pour autant. Ils n'optimisent pas tous les déplacements et ne possèdent pas la souplesse d'utilisation de l'invention, en permettant à l'utilisateur de choisir son itinéraire entre plusieurs, d'en comparer les longueurs et de les faire passer par des points de repère à volonté. Enfin, ils ne se déroulent pas tous à l'écran au gré de l'utilisateur, au fur et à mesure de sa progression sur son itinéraire, ou en proportion de la vitesse du véhicule.

On pourrait dire qu'aussi les types de guide électronique connus sont muets, et ne prennent nullement en compte l'intérêt de l'utilisateur et son ouverture d'esprit pour les choses qu'il observe autour de lui en se déplaçant. L'utilisateur est laissé dans une grande ignorance, il n'a pas d'occasion de parfaire ses connaissances, sauf à consulter des guides de toutes sortes, ou des livres, action qu'il ne peut bien entendu entreprendre en conduisant. Il ne peut recevoir aucun message fût-il important, qui peut le concerner directement sur son parcours à l'instant où il s'y trouve, par exemple d'ordre municipal ou de police, ou aucun message commercial ou publicitaire, alors qu'il peut être de son intérêt d'apprendre en passant dans une rue que son extrémité est en travaux, ou qu'il y a un parc de stationnement, ou à l'heure du déjeuner qu'il s'y trouve un bon restaurant, cette information n'étant déclenchée qu'à volonté de l'utilisateur, et dans le cas bien sûr où un restaurateur souhaite attirer la clientèle empruntant sa rue.

On voit qu'aucun guide électronique aussi complet et aussi simple de conception n'a jamais offert autant de simplicité et de services à un utilisateur, en ne présentant qu'un itinéraire schématique et pourtant fidèle de l'itinéraire suivi qui concerne seul un utilisateur, en en présentant le stronçons successifs à volonté.

Aucun n'a pu avoir une aussi grande utilité économique, par sa simplicité de conception, une aussi grande utilité culturelle par les interrelations qu'il permet, et une utilité commerciale par les affaires et les «commandites» (ou «sponsor-ships») qu'il peut engendrer avec la publicité qu'il traduit. De plus, le guide de l'invention n'use pas d'une obligation d'écoute comme une radio embarquée, puisque son information générale n'est écoutable qu'à la seule volonté de l'utilisateur.

Le document FR-A 2 448 202 décrit un appareillage électronique indicateur d'itinéraires, de guidage et d'information pour la circulation comportant des supports à mémoire pour recevoir des données cartographiques et des informations générales, et défini comme un appareillage électronique embarqué de traitement et de visualisation de l'information recevant lesdits supports à mémoire et susceptible de sélectionner un itinéraire et d'indiquer, visuellement ou phoniquement, les actions à entreprendre pour suivre l'itinéraire. En pratique, cet appareillage embarqué sélectionne un itinéraire prédéterminé entre deux noeuds routiers voisins respectivement du point de départ et du point d'arrivée, et les indications qu'il donne sont limitées à l'identité des noeuds routiers connus qui sont les étapes de l'itinéraire.

L'un des buts de l'invention est de fournir un système électronique simple et complet de guidage optimisé et d'information pour la circulation, permettant le choix d'un itinéraire, et le guidage effectif tout au long de cet itinéraire par le moyen de renseignements directement et facilement perceptibles.

Un autre but de l'invention est de fournir un appareil de relevé, d'identification, de codage, de compactage, de mémorisation et de mise à jour, qui assure un relevé cartographique d'une zone de circulation et qui couple dans une mémoire, aux noms des voies des sites et des lieux, des abrégés d'information cartographique, municipale, historique, touristique, économique, politique, commerciale, technique ou publicitaire, de façon à donner de l'intérêt à tout itinéraire emprunté, et à informer l'utilisateur dans la rubrique d'information qu'il choisit.

Un autre but de l'invention est de fournir des supports à mémoire portant des informations de guidage et des informations générales, qui soient commercialisables facilement, qu'ils soient différents ou confondus, permettant en outre le couplage d'informations de nature différente, alors que jusqu'ici ces informations étaient considérées comme étrangères les unes aux autres, et l'objet de documents d'édition difficilement rapprochables bien que complémentaires entre eux.

Un autre but est de fournir un appareil de stockage que l'on pourra trouver en ville, comme sont répandus aujourd'hui des distributeurs de billets de banque à carte magnétique, qui mette à disposition en tout point des supports à mémoire peu chers et susceptibles d'être mis à jour par l'appareil de stockage.

L'invention se présente ainsi comme un système complet d'aide à la circulation fournissant des indications nécessaires à la conduite sereine et informée d'un véhicule. Ce système électronique de guidage optimisé et d'information pour la circulation est utilisable dans n'importe quelle zone géographique, et quel que soit le moyen de locomotion utilisé.

La présente invention a pour objet un système électronique de guidage et d'information pour la circulation, du type comportant :
- des supports à mémoire (1, 1a) pour recevoir des données cartographiques et des informations générales :
- et un appareil électronique embarqué (2) de traitement et de visualisation de l'information, susceptible de recevoir lesdits supports à mémoire (1, 1a), comprenant : un clavier de commande (4), un écran de visualisation (29), un bouton de progression (5) à commande manuelle, et susceptible par un programme inclus dans l'appareil, de choisir un itinéraire entre un point de départ et un point d'arrivée définis par l'intermédiaire du clavier (4), et de donner, visuellement ou phoniquement, après chaque commande du bouton de progression (5) des indications pour assurer le guidage sur l'itinéraire choisi, caractérisé en ce qu'il comporte :
- un appareil (40) de relevé, d'identification, de codage, de compactage, de mémorisation et de mise à jour de données cartographiques relatives à chacun des tronçons de chacune des voies d'une zone de circulation telles que l'orientation par rapport au Nord, la longueur de la voie, les points de sécance, les noms, les numéros pairs ou impairs, les points de repère tels que monuments publics, églises, squares, et d'informations générales couplées aux voies de cette zone ;
- un appareil de stockage (41) susceptible de délivrer sur lesdits supports à mémoire (1, 1a) lesdites données cartographiques et/ou informations générales ;

et caractérisé en ce que,
à partir des données cartographiques et des informations générales relevées par l'appareil (40) de relevé, d'identification, de codage, de compactage, de mémorisation et de mise à jour, et cédées par l'appareil de stockage (41) par reproduction sur lesdits supports à mémoire (1, 1a), l'appareil électronique embarqué définit, par une suite de tronçons correspondant chacun à une portion de voie de circulation, un itinéraire allant du point de départ au point d'arrivée, lesdits points de départ et d'arrivée étant définis par l'intermédiaire du clavier (4) ;
en ce que,
l'appareil électronique embarqué assure la représentation du tronçon de voie suivi et du tronçon de voie suivant, le tronçon de voie suivi étant représenté dans l'axe du véhicule,
et en ce que,
après chaque commande du bouton de progression (5), effectuée à la fin du tronçon de voie suivi, l'appareil électronique embarqué délivre des indications visuelles ou phoniques de guidage relatives à l'action à entreprendre pour emprunter le tronçon de voie suivant. Selon d'autres caractéristiques de l'invention:
- l'appareil de relevé, d'identification, de codage, de compactage, de mémorisation et de mise à jour de données cartographiques comporte: un écran sensible sur lequel est représentée une carte d'une zone de circulation; un clavier d'identification des voies apparaissant sur l'écran; et des moyens électroniques pour relever les caractéristiques de chacune de ces voies, telles que l'orientation par rapport au nord, la longueur des différents tronçons, la largeur, les points de sécance, le nom, le sens autorisé et les points particuliers de repère; de façon à assurer le codage et la mémorisation des données cartographiques relatives à chaque voie de ladite zone;
- l'appareil de relevé, d'identification, de codage, de compactage, de mémorisation et de mise à jour comporte en outre: des mémoires pour l'enregistrement d'informations générales, commerciales, publicitaires, économiques, touristiques, historiques, municipales ou techniques, en relation avec lesdites voies; et des moyens de corrélation entre ces informations générales et les données cartographiques relatives auxdites voies;
- l'appareil de stockage comporte: des mémoires de stockage des données cartographiques et des informations générales en provenance de l'appareil de relevé, d'identification, de codage, de compactage, de mémorisation et de mise à jour; des moyens pour recevoir un pré-paiement; des moyens de sélection des données cartographiques et des informations générales à délivrer; des moyens électroniques de chargement, sur des supports à mémoire, des données cartographiques et des informations générales sélectionnées; et des moyens de distribution desdits supports à mémoire ainsi chargés.
- les supports à mémoire sont constitués par des cartes à mémoire, et éventuellement à microprocesseur, des blocs enrobés, des bandes magnétiques ou des disques, susceptibles d'être rechargés par l'appareil de stockage;
- l'appareil électronique embarqué de traitement et de visualisation de l'information comporte des écrans pour l'indication en clair de la voie de départ, de la voie de destination, de la voie suivie, de la voie ultérieure, des points de repère intermédiaires et des voies sécantes à gauche et à droite et de leur rang;
- l'appareil embarqué comporte en outre des écrans pour l'affichage d'informations primaires telles que la longueur du trajet, la distance restant à parcourir, la longueur du tronçon suivi, des points de repère et des informations secondaires, telles que signaux du code de la route ou de prévention routière;
- l'appareil embarqué comporte des voyants orientés représentatifs d'instructions de conduite, commandés par le bouton de progression et de retour en arrière, le talon du voyant axial symbolisant le véhicule;
- l'appareil embarqué, comporte un écran de représentation du tronçon de voie suivi, représenté dans l'axe du véhicule, et du tronçon de voie ultérieur, avec leurs sécantes, avec recalage des tronçons au fur et à mesure de la progression du véhicule;
- l'appareil embarqué comporte un écran de représentation de l'itinéraire total suivi;
- l'appareil embarqué comporte des écrans de défilement en tambour des noms des voies sécantes, et des noms des voies de départ, d'arrivée, et de repères;
- la commande du bouton de progression et de retour en arrière assure le défilement pas-à-pas ou le retour en arrière des tronçons de voie suivis, sur ledit écran;
- l'appareil embarqué comporte une liaison mécanique au véhicule pour commander le défilement en continu ou par point lumineux de la représentation de l'itinéraire suivi et des informations correspondantes;
- la coordination dudit défilement en continu ou par point lumineux est ajustée au parcours réel du véhicule par compas et mouvement inertiel;
- l'appareil embarqué comporte des boutons de commande dont la manoeuvre assure la transmission visuelle ou phonique des informations générales, commerciales, publicitaires, économiques, touristiques, historiques, municipales ou techniques, correspondant à l'itinéraire suivi et à ses points remarquables, en fonction de la corrélation assurée par l'appareil de relevé, d'identification, de codage, de compactage, de mémorisation et de mise à jour entre ces informations générales et les données cartographiques relatives auxdites voies.
- l'appareil embarqué comporte un programme inclus de détermination, à partir du point de départ et du point d'arrivée définis par l'utilisateur, dans n'importe quelle zone géographique, d'au moins un itinéraire, et de sélection des informations primaires et secondaires et des informations générales, enregistrées dans les supports à mémoire, correspondant à cet itinéraire.

D'autres caractéristiques ressortiront de la description qui suit, faite avec références au dessin annexé sur lequel on peut voir:
Figure 1, un schéma simplifié de l'ensemble du système électronique de guidage et d'information, adapté à la circulation routière;
Figure 2, un schéma simplifié d'un premier mode de réalisation de l'appareil électronique embarqué de traitement de l'information et de visualisation, faisant partie du système de la figure 1, et utilisant une représentation des sens de déplacements par des voyants lumineux;
Figure 3, un schéma simplifié d'un deuxième mode de réalisation de l'appareil électronique embarqué faisant partie du système de la figure 1, et utilisant une représentation d'itinéraires.

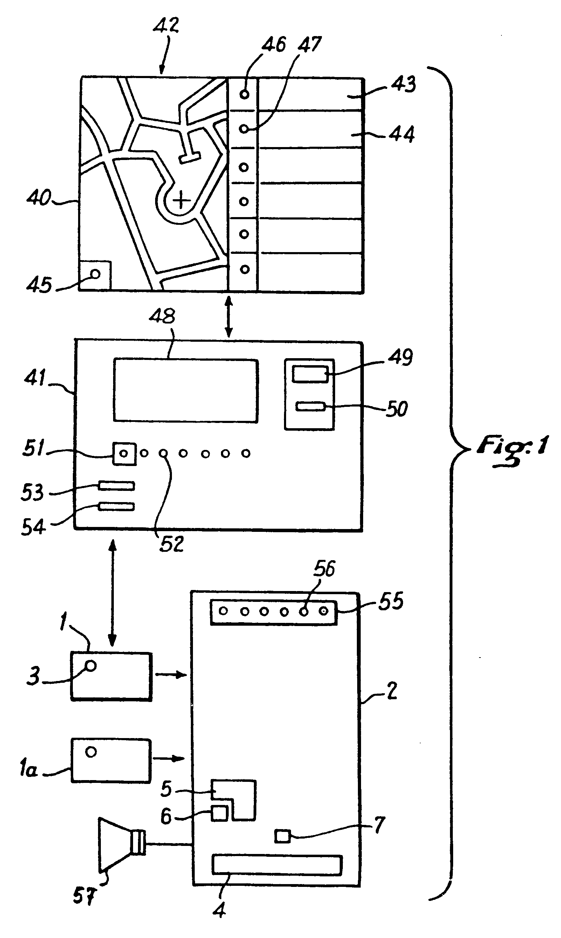

En se reportant au dessin, on peut voir (figure 1) que le système électronique de guidage et d'information pour la circulation selon l'invention, se compose essentiellement des éléments suivants:
- un appareil 40 de relevé, d'identification de codage, de compactage, de mémorisation et de mise jour de données cartographiques relatives à une zone de circulation, et d'informations générales correspondant à cette zone;
- un appareil 41 de stockage, susceptible de délivrer sur des supports à mémoire les données cartographiques et les informations générales codées par l'appareil de codage et de mémorisation 40 (désigné ainsi plus brièvement);
- des supports 1, 1a, à mémoire non volatile, pour recevoir lesdites données et informations générales; et
- un appareil 2 électronique embarqué de traitement de l'information et de visualisation, susceptible de recevoir au moins un des supports à mémoire 1, 1a.

L'appareil 40 de codage et de mémorisation de données assure le codage et la mémorisation des données cartographiques d'une zone déterminée, urbaine par exemple. Sur un écran 42 sensible est représentée une carte orientée, et au moyen d'un crayon électronique, on peut suivre sur l'écran les tronçons de voies après les avoir identifiés au moyen d'un clavier non représenté.

Les informations cartographiques ainsi codées et mémorisées sont par exemple, pour chaque tronçon de voie: l'orientation par rapport au nord, la longueur, la largeur de la voie, les points de sécance, les noms et les points de repère tels que monuments publics, églises, squares, etc.

Il va de soi que ce mode de saisie des données est décrit à titre indicatif et peut être remplacé par tout équivalent technique.

Après identification d'un tronçon de voie et mémorisation des données cartographiques codées correspondantes, on peut enregistrer en mémoire des informations générales, municipales, historiques, touristiques, économiques, politiques, commerciales ou publicitaires par exemple. Ces informations sont enregistrées dans des mémoires telles que 43 pour les informations municipales, 44 pour les informations historiques, etc. Ces informations se rapportent au tronçon de voie identifié et la corrélation entre le tronçon de voie et les informations d'un type donné est assurée par l'intermédiaire du bouton de corrélation 45 et des boutons de commande des mémoires respectives 46, 47 par exemple. Par cette corrélation, les informations générales des mémoires 43, 44, etc., sont couplées aux noms des voies ou à leurs coordonnées, avec un signal de corrélation tel que la visualisation du nom d'une voie sur un écran de l'appareil électronique embarqué 2 rend possible la relation des informations générales, sous forme de texte lisible ou audible, par exemple.

L'appareil 40 de codage et de mémorisation est susceptible de compacter les différentes données et informations pour les rendre enregistrables sur un support de petites dimensions. En cas de modification de certaines données ou informations, cet appareil est à même d'assurer les mises à jour correspondantes.

L'appareil 41 de stockage se présente comme un distributeur automatique de tickets à pré-paiement. Il comporte un récepteur de pièces de monnaie 49, un récepteur de carte de crédit ou de carte de paiement 50, un écran de dialogue 48, et des boutons de commande pour le choix des supports à mémoire qu'il est susceptible de délivrer. Ces supports peuvent se présenter sous forme de cartes à mémoire, de blocs enrobés, de bandes magnétiques, ou de disques à mémoire. L'appareil peut en détenir en stock et en recevoir de l'extérieur par une fente d'admission 53. Il procède au chargement des données et/ou informations sur une carte et délivre la carte par une fente de sortie 54. Les boutons de commande permettent de sélectionner les données cartographiques (bouton 51) ou les informations d'un type particulier, municipal, historique, touristique, économique, politique, commercial ou publicitaire par exemple (bouton 52 correspondant au type d'information choisi). Ces éléments pratiques sont donnés à titre indicatif et peuvent etre remplacés par des équivalents techniques.

L'appareil de stockage 41 comprend une mémoire susceptible d'etre chargée périodiquement par l'appareil 40 de codage et de mémorisation, pour stocker des données et informations compactées, en vue de leur cession, après paiement, par reproduction sur les supports à mémoire.

Les supports à mémoire 1, 1a, sont des supports non volatils, protégés et non reproductibles contenant des données cartographiques habituellement lues sur un plan de ville ou une carte routière, et des informations générales, en corrélation avec les points remarquables des itinéraires suivis. Ces supports à mémoire peuvent etre mis à jour par l'appareil de stockage 41. Ils portent éventuellement un microprocesseur 3.

Un support de données cartographiques est propre à une ville, un quartier, une aire géographique, généralement couverte par un plan de ville ou une carte routière.

Il porte des informations primaires habituellemetn lues sur un plan de ville ou une carte routière. Ces informations sont complétées par des informations secondaires d'usage ou des conseils de conduite, qui peuvent etre utiles pour la conduite du véhicule, allant des signaux du code de la route à la prévention routière et aux indications touristiques. Les informations primaires sont relatives aux voies de circulation telles que rues, routes, places, ponts, etc. Pour chaque voie elles comprennent: les informations d'identification, c'est-à-dire le type de voie (rue, avenue, impasse, place ...) et son nom; les informations de caractéristiques propres, c'est-à-dire la longueur, la largeur, l'orientation par rapport au nord, le sens autorisé s'il n'y en a qu'un, et le sens croissant des numéros de la voie, par exemple, dans le cas de voies urbaines; et les informations d'identification des voies sécantes, c'est-à-dire leur nom, leur position à droite ou à gauche par rapport au sens croissant des numéros de la voie, et l'angel qu'elles font avec la voie par exemple.

Les informations secondaires sont relatives à la praticabilité de la voie, à la présence de travaux par exemple, aux points de repère aisément reconnaissables sur la voie ou dans son voisinage, aux points d'intérêt touristique, aux indications de prévention (croisements dangereux, limitation de vitesse), par exemple, ou aux informations générales.

Le support cartographique porte des informations permanentes mais révisables, c'est-à-dire susceptibles d'être mises à jour. Il couvre une zone géographique bien définie. Un autre support cartographique correspond à une zone adjacente, de sorte que le remplacement d'un support par un autre puisse assurer une continuité, dans le guidage, comme dans le cas des plis adjacents d'une carte géographique.

Par ailleurs, pour une même zone géographique, on peut prévoir un premier support cartographique relatif essentiellement aux informations de circulation, et un second support contenant essentiellement des informations de type touristique, historique, commercial, économique, ou autre.

Des supports cartographiques différents peuvent contenir des informations d'échelle différente, par exemple au 1/50 000e et au 1/10 000e.

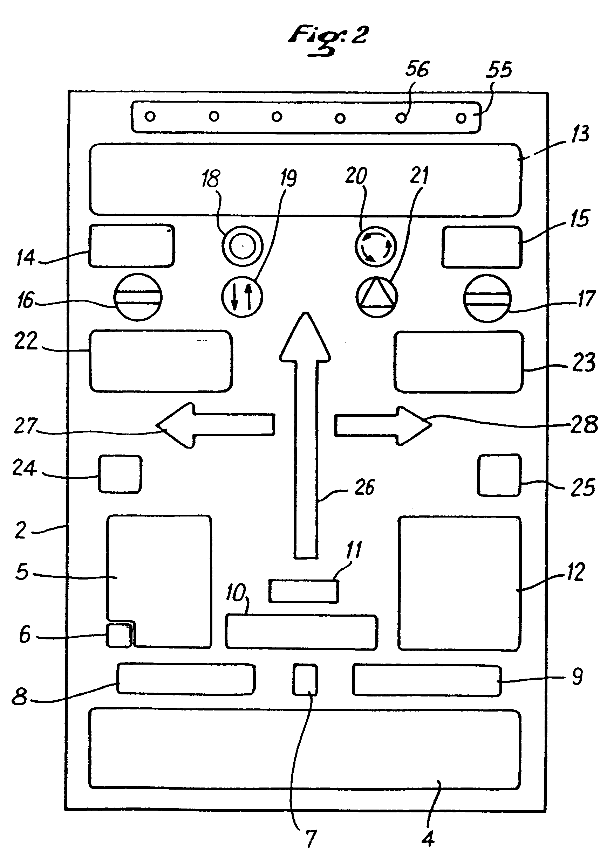

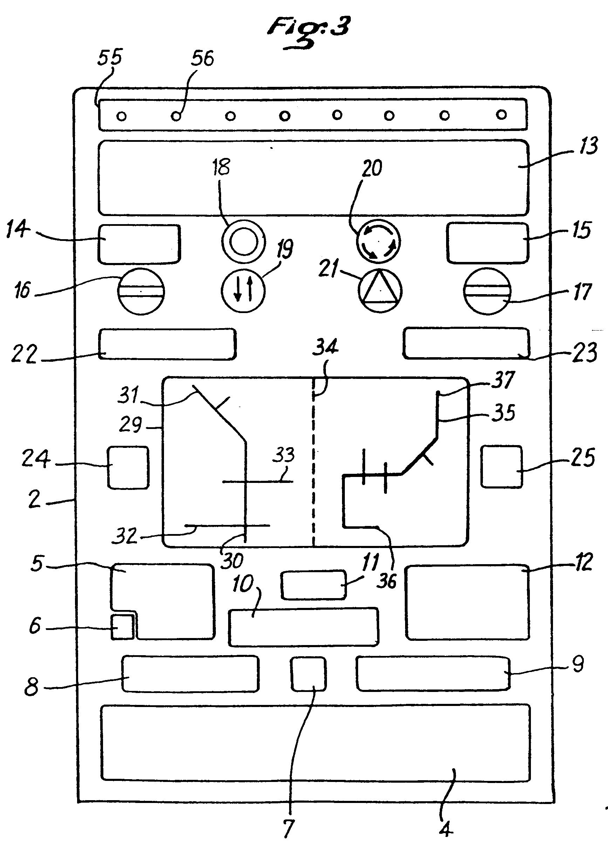

L'appareil électronique embarqué 2 de traitement de l'information et de visualisation comprend un ensemble de mémoires et de microprocesseurs. Il est susceptible de recevoir un ou deux supports de mémoire tels que 1 et 1a. Il comprend un clavier 4, deux boutons de commande 5 et 6, l'un pour la progression 5, l'autre pour le retour en arrière 6, un bouton 7 de commande «marche-arrêt», et un certain nombre d'emplacements de visualisation ou d'affichage qui vont être décrits en relation avec les figures 2 et 3.

Le clavier 4 comporte des touches de lettres et des touches de chiffres, disposées de manière classique.

Il présente également une touche «Entrée», et des touches rapides de qualification des voies ou des points de repère, permettant chacune d'enregistrer par une seule pression un mot comme: route, rue, boulevard, avenue, place, poste, église, ou monuments, par exemple.

Enfin, il comporte deux touches permettant d'indiquer, au point de départ d'un itinéraire, si le véhicule est orienté dans le sens des numéros croissants ou décroissants de la voie. Le clavier est de préférence disposé en bas du dispositif. On peut prévoir l'enregistrement de données au toucher sur un écran.

L'appareil 2 présente encore un certain nombre d'emplacements de visualisation. Dans la suite de la description, ces emplacements correspondent à des écrans spécifiques, mais ils peuvent aussi bien correspondre à des zones spécifiques sur un écran unique par exemple. L'appareil 2 présente encore un cadre 55 muni de boutons de commande 56 qui correspondent respectivement aux informations municipales, historiques, touristiques, économiques, politiques, commerciales ou publicitaires, susceptibles d'être contenues dans le support à mémoire 1a, en corrélation avec les informations cartographiques du support 1. L'appareil 2 peut en outre être équipé d'un haut-parleur 57.

Sur les figures 2 et 3, les écrans ayant le même rôle sont identifiés par les mêmes références. Ces écrans plats, cathodiques, à cristaux liquides, luminescents, ou lumineux, occupent la plus grande partie de la surface de l'appareil 2. Au centre se trouve l'espace consacré à l'affichage principal, dont la disposition varie en fonction du mode de représentation choisie. Autour de cet espace central sont disposés les écrans correspondant à des informations indispensables pour suivre le trajet choisi, ou utiles.

Juste au-dessus du clavier 4, les deux écrans 8 et 9, en ligne à gauche et à droite du bouton 7 de marche-arrêt, affichent le nom de la voie de départ et de la voie d'arrivée, respectivement. Cet affichage n'est pas modifié tout au long du trajet. Il rappelle les données utilisées pour la définition de l'itinéraire.

Au-dessus, en position centrale, se trouve l'écran 10 affichant le nom de la voie suivie par le véhicule. A chaque bifurcation, ou à chaque changement de nom de voie sur un parcours rectiligne, l'affichage se modifie. Au-dessus, I'écran 11 affiche la longueur du tronçon de voie que le véhicule est en train de parcourir, ce qui constitue une information utile pour la conduite du véhicule.

Sur le côté droit du dispositif, symétrique du bouton de progression 5, se trouve un écran 12 des points de repère, qui affiche les noms et les symboles des points de passage obligé de l'itinéraire, enregistrés avant le départ par l'utilisateur au moyen du clavier. Cet écran porte en permanence la liste de ces points de passage. Lorsque l'un d'eux correspond à une indication paraissant sur un autre écran de l'appareil 2, comme une voie sécante par exemple, il peut être prévu de renforcer l'éclairement dudit point de passage sur l'écran 12 par un flash par exemple.

Si l'on se reporte à la partie supérieure de l'appareil 2, on trouve un écran 13 en ligne, qui présente, en défilement, des informations définies plus haut comme secondaires, c'est-à-dire par exemple des informations de prévention routière, municipales ou touristiques.

En-dessous de cet écran 13, on trouve respectivement à gauche et à droite, deux écrans 14 et 15 correspondant: le premier, à la distance restant à parcourir sur l'itinéraire en cours, le second à la longueur totale de cet itinéraire. L'écran 15 affiche cette distance avant le départ, ce qui permet des comparaisons entre des itinéraires passant par des points intermédiaires différents. La distance restant à parcourir, qui apparaît sur l'écran 14, est évaluée, à partir de la longueur totale, par soustraction des longueurs de tronçons apparaissant sur l'écran 11.

Dans la même zone de l'appareil 2, se trouvent quelques écrans correspondant à des informations routières facilitant la conduite, en complément aux indications extérieures de l'affichage routier. On peut par exemple disposer des écrans de sens interdit à gauche 16 ou à droite 17; de limitation de vitesse 18; de sens de circulation 19 signalant un élargissement ou un rétrécissement de voie, un sens unique ou un double sens, une double ou triple file, par exemple; de sens giratoire 20 imposant une règle particulière de priorité; et de danger 21, par exemple.

En dessous de ces petits écrans 16 à 21, on trouve deux écrans 22 et 23 assez grands pour l'affichage des noms des voies sécantes respectivement à gauche et à droite par rapport au tronçon de voie suivi.

Un peu plus bas sur les figures 2 et 3, les deux écrans 24 et 25 indiquent le rang, dans le tronçon suivi, de la prochaine voie dans laquelle on doit tourner, respectivement à gauche 24 ou à droite 25. L'affichage du rang 3 sur l'écran 25 signifie qu'il faut laisser passer deux voies à droite avant de tourner dans la troisième, et donne une «instruction de faire» à l'utilisateur bien avant qu'il n'aborde son changement de cap. La seule lecture du rang de la rue où il faut tourner est une indication utile et une aide pour la conduite.

Tous les éléments précédemment décrits peuvent être considérés comme communs aux différents modes de réalisation du dispositif selon l'invention, bien que les dimensions relatives de certains écrans puissent varier. C'est essentiellement dans la partie centrale du dispositif que les moyens d'affichage diffèrent en fonction du mode de réalisation retenu pour la représentation de l'itinéraire à suivre.

La figure 2 illustre un premier mode de réalisation correspondant à une représentation des sens de déplacement par des flèches ou des voyants orientés. La partie centrale de l'appareil 2 porte une flèche axiale 26 correspondant au cap du véhicule, et deux flèches transversales 27 et 28 correspondant aux instructions «tourner à gauche» et «tourner à droite», respectivement. Le talon de la flèche 26 et illuminé pour symboliser le véhicule. La pointe de la flèche 26 est illuminée quand l'instruction est d'aller tout droit, la flèche de gauche 27 est illuminée quand l'instruction est de tourner a gauche, et la flèche de droite 28 est illuminée quand l'instruction est de tourner à droite.

La figure 3 illustre un deuxième mode de réalisation correspondant à une représentation des tronçons de trajet. La partie centrale du dispositif est un écran 29 comportant deux parties séparées par une ligne 34 visible ou non. Sur la partie gauche de cet écran est représenté le tronçon 30 sur lequel se trouve le véhicule et le tronçon 31 que le véhicule doit emprunter, et qui fait un angle avec le tronçon 30. De cette manière, l'utilisateur a par avance une visualisation de son prochain changement de direction, l'angle des deux tronçons 30 et 31 correspondant à l'angle de changement de cap à prévoir. Les deux tronçons 30 et 31 sont illuminés. Par ailleurs, l'écran 29 représente les voies sécantes 32, 33 qui ne sont pas à emprunter, mais qui permettent de mieux savoir où se trouve le véhicule. Ces voies sécantes ne sont représentées que pour la longueur de leur premier tronçon depuis le tronçon 30, c'est pourquoi leurs segments à gauche et à droite dudit tronçon 30 peuvent être de longueur différente.

Sur la partie droite de l'écran 29 est représenté en totalité l'itinéraire 35 à suivre du point de départ 36 au point d'arrivée 37. Sur cet itinéraire 35 est prévue en éclairement renforcé la portion d'itinéraire représentée sur la partie gauche de l'écran.

Sur la figure 3, on n'a représenté que deux tronçons 30 et 31, considérés comme suffisants. Il va de soi qu'on peut en représenter plusieurs sans difficulté. Comme on le verra plus loin, à chaque changement de tronçon, on recale la représentation du trajet à partir du point de croisement des deux tronçons 30 et 31, le tronçon 31 venant prendre la place du tronçon 30 et le nouveau tronçon lui faisant suite étant représenté.

Selon un troisième mode de réalisation, on peut afficher l'itinéraire en continu, pour qu'il se déroule au rythme de la progression du véhicule. On peut ainsi avoir une représentation en arête de poisson, qui se redresse au fur et à mesure du défilement des voies sur son premier tronçon, à la base de l'écran.

On peut également faire une représentation fixe et orientée vers le nord, c'est-à-dire une représentation cartographique statique. Le véhicule est alors représenté par un point lumineux sur l'itinéraire à suivre, grossi par l'effet de loupe.

Enfin, il est prévu un quatrième mode de réalisation, assurant le guidage à partir des voies sécantes, en succession à gauche et à droite de l'itinéraire suivi. Par rapport aux figures 2 et 3, la seule modification réside dans l'agrandissement des écrans 22 et 23 des voies sécantes, de façon à y faire apparaître non plus l'identification de la première voie sécante à croiser, mais la liste de toutes les voies sécantes, à gauche et à droite, respectivement, de l'itinéraire. Cette présentation en liste à une triple fonction. Tout d'abord, la sélection des voies de départ et d'arrivée peut être obtenue en faisant défiler la liste alphabétique des voies, et en l'arrêtant à la voie désirée, qui est sélectionnée par toucher sur l'écran. Ensuite, au cours du trajet, les voies sécantes, à droite et à gauche respectivement, défilent en déplacement continu et ligne à ligne, du haut de l'écran vers le bas. Ce défilement est appelé «en tambour», ou «scrolling». Lorsque l'une de ces voies correspond à une voie à emprunter, le nom correspondant s'illumine sur l'écran. Enfin, on peut faire défiler sur l'écran la liste des points de repère au moment de la sélection d'un itinéraire.

Le fonctionnement de l'appareil électronique embarqué de traitement de l'information et de visualisation s'analyse de la manière suivante: on prend tout d'abord le support cartographique 1 correspondant à la zone de circulation (ville, zone rurale, région, par exemple) et on l'insère dans l'appareil 2. On fait de même avec le support la correspondant aux informations générales désirées, historiques, touristiques ou autres. Ensuite, par l'intermédiaire du clavier 4, on définit la voie du départ par son nom, qui s'affiche sur les écrans 8 et 10, et le sens du véhicule par rapport aux numéros de la voie (croissants ou décroissants); on définit ensuite, toujours par le clavier, la voie de destination, qui s'affiche sur l'écran 9; on peut également imposer le passage par un ou plusieurs points intermédiaires, qui s'affichent sur l'écran 12. La phase d'introduction de données est alors terminée.

L'appareil 2 est programmé pour définir un itinéraire à partir des données qui lui ont été fournies. La longueur de cet itinéraire s'affiche alors sur les écrans 14 et 15. L'utilisateur a la possibilité de refuser un itinéraire et d'en demander un autre. Il a également la possibilité de revenir au premier, si le second itinéraire ne lui convient pas. L'itinéraire étant défini, on entre alors dans la phase de guidage proprement dit, avec, selon le mode de représentation, la flèche 26 qui s'éclaire (figure 2), ou les tronçons de voies 30 et 31 qui apparaissent sur l'écran 29 (figure 3). C'est alors que le bouton de progression 5 doit intervenir, pour commander l'affichage successif des informations relatives à l'itinéraire à suivre, au fur et à mesure de la progression du véhicule.

Dans le premier mode de réalisation (figure 2), le bouton de progression doit être appuyé chaque fois que l'utilisateur aborde un nouveau segment de l'itinéraire, c'est-à-dire à chaque changement de l'indication d'un des écrans 22 et 23 affichant les noms des voies sécantes. Il commande les flèches 26, 27, 28.

Dans le deuxième mode de réalisation (figure 3), le bouton de progression doit être appuyé à chaque changement de tronçon. Il commande le recalage du tronçon suivi sur l'écran 29 et l'apparition d'un nouveau tronçon.

Selon le troisième mode de réalisation, le bouton de progression commande la présentation de l'itinéraire en arête de poisson lorsque l'appareil n'est pas lié au véhicule.

Enfin, pour le quatrième mode de réalisation, la situation est la même que pour les deux premiers.

Au fur et à mesure de la progression du véhicule, lorsqu'un signal de corrélation est détecté, le bouton 56 s'illumnie et si le conducteur le désire, il peut le manoeuvrer par pression. Il peut alors entendre par le hautparleur 57, ou lire sur l'écran 13, les informations générales correspondantes qui sont en relation avec le point particulier de l'itinéraire où il est en train de passer.

Il est possible de lier mécaniquement au parcours réel du véhicule, le défilement des informations relatives à un itinéraire déterminé, dans la mesure où l'utilisateur donne à son véhicule les ordres nécessaires pour suivre le déroulement de la présentation en continu. On peut assurer la vérification de l'appareil et son ajustement au déplacement du véhicule, notamment par compas et mouvement inertiel, par exemple.

Enfin, comme pour toute fonction de l'appareil, il est possible de répéter les présentations, ou de faire retour en arrière des informations données.

Ainsi, l'appareil électronique de guidage selon l'invention fournit une information de déplacement lié ou non à la marche d'un véhicule, par signal fléché, par défilement pas à pas ou continu d'une représentation cartographique, ou par défilement de noms des voies sécantes, décrivant un itinéraire à suivre entre un point de départ et un point de destination, en présentant, en corrélation, les actions à entreprendre, toutes les informations nécessaires au guidage, à l'aide à la conduite, et simultanément des informations culturelles. L'appareil peut recevoir des instructions par l'intermédiaire du clavier, ou phoniquement.

Il peut présenter ces informations sous forme visuelle ou phonique, par écrans, lampes, éclairs lumineux ou flashes, sons au voix, par exemple. Il est utilisable dans tout moyen de transport ou de navigation mais il peut également être utilisé sans véhicule pour des déplacements à pied.

Le programme inclus dans l'appareil embarqué permet de calculer, représenter, et renseigner au moins un itinéraire choisi par l'utilisateur.

Des extensions professionnelles, et en particulier, revêtant une caractéristique de processus de fabrication, ou de succession d'actions reflétant des instructions ou un mode opératoire, peuvent être envisagées.

On peut également utiliser le système électronique de guidage pour les réseaux de transport en commun, et notamment pour le réseau métropolitain. On peut l'appliquer au guidage de la visite de sites touristiques ou de musées par exemple.

Compte-tenu de ses performances, le système de guidage selon l'invention peut être qualifié de guide intelligent.

## Revendications

1. Système électronique de guidage et d'information pour la circulation, du type comportant :
- des supports à mémoire (1, 1a) pour recevoir des données cartographiques et des informations générales :
- et un appareil électronique embarqué (2) de traitement et de visualisation de l'information, susceptible de recevoir lesdits supports à mémoire (1, 1a), comprenant : un clavier de commande (4), un écran de visualisation (29), un bouton de progression (5) à commande manuelle, et susceptible par un programme inclus dans l'appareil, de choisir un itinéraire entre un point de départ et un point d'arrivée définis par l'intermédiaire du clavier (4), et de donner, visuellement ou phoniquement, après chaque commande du bouton de progression (5) des indications pour assurer le guidage sur l'itinéraire choisi, caractérisé en ce qu'il comporte :
- un appareil (40) de relevé, d'identification, de codage, de compactage, de mémorisation et de mise à jour de données cartographiques relatives à chacun des tronçons de chacune des voies d'une zone de circulation telles que l'orientation par rapport au Nord, la longueur de la voie, les points de sécance, les noms, les numéros pairs ou impairs, les points de repère tels que monuments publics, églises, squares, et d'informations générales couplées aux voies de cette zone ;
- un appareil de stockage (41) susceptible de délivrer sur lesdits supports à mémoire (1, 1a) lesdites données cartographiques et/ou informations générales ;
et caractérisé en ce que,
à partir des données cartographiques et des informations générales relevées par l'appareil (40) de relevé, d'identification, de codage, de compactage, de mémorisation et de mise à jour, et cédées par l'appareil de stockage (41), par reproduction sur lesdits supports à mémoire (1, 1a), l'appareil électronique embarqué définit, par une suite de tronçons correspondant chacun à une portion de voie de circulation, un itinéraire allant du point de départ au point d'arrivée, lesdits points de départ et d'arrivée étant définis par l'intermédiaire du clavier (4) ;
en ce que,
l'appareil électronique embarqué assure la représentation du tronçon de voie suivi et du tronçon de voie suivant, le tronçon de voie suivi étant représenté dans l'axe du véhicule,
et en ce que,
après chaque commande du bouton de progression (5), effectuée à la fin du tronçon de voie suivi, l'appareil électronique embarqué délivre des indications visuelles ou phoniques de guidage relatives à l'action à entreprendre pour emprunter le tronçon de voie suivant.

2. Système selon la revendication 1, caractérisé en ce que l'appareil (40) de relevé, d'identification, de codage, de compactage, de mémorisation et de mise à jour de données cartographiques comporte: un écran sensible (42) sur lequel est représentée une carte d'une zone de circulation; un clavier d'identification des voies apparaissant sur l'écran; et des moyens électroniques pour relever les caractéristiques de chacune de ces voies, telles que l'orientation par rapport au nord, la longueur des différents tronçons, la largeur, les points de sécance, le nom, le sens autorisé et les points particuliers de repère; de façon à assurer le codage et la mémorisation des données cartographiques relatives à chaque voie de ladite zone.

3. Système selon la revendication 2, caractérisé en ce que l'appareil (40) de relevé, d'identification, de codage, de compactage, de mémorisation et de mise à jour comporte en outre: des mémoires (43, 44) pour l'enregistrement d'informations générales, commerciales, publicitaires, économiques, touristiques, historiques, municipales ou techniques, en relation avec lesdites voies; et des moyens de corrélation (45, 46, 47) entre ces informations générales et les données cartographiques relatives auxdites voies.

4. Système selon la revendication 1, caractérisé en ce que l'appareil de stockage (41) comporte: des mémoires de stockage des données cartographiques et des informations générales en provenance de l'appareil (40) de relevé, d'identification, de codage, de compactage, de mémorisation et de mise à jour; des moyens (49, 50) pour recevoir un pré-paiement; des moyens (51, 52) de sélection des données cartographiques et des informations générales à délivrer; des moyens électroniques de chargement, sur des supports à mémoire, des données cartographiques et des informations générales sélectionnées; et des moyens (54) de distribution desdits supports à mémoire ainsi chargés.

5. Système selon la revendication 1, caractérisé en ce que les supports à mémoire (1, 1a) sont constitués par des cartes à mémoire, et éventuellement à microprocesseur, des blocs enrobés, des bandes magnétiques ou des disques, susceptibles d'être rechargés par l'appareil de stockage (41).

6. Système selon la revendication 1, caractérisé en ce que l'appareil électronique embarqué (2) de traitement et de visualisation de l'information comporte des écrans pour l'indication en clair de la voie de départ (8), de la voie de destination (9), de la voie suivie (10), de la voie ultérieure, des points de repère intermédiaires (12) et des voies sécantes à gauche (22) et à droite (23) et de leur rang (24, 25).

7. Système selon la revendication 6, caractérisé en ce que l'appareil embarqué (2) comporte en outre des écrans pour l'affichage d'informations primaires telles que la longueur du trajet (15), la distance restant à parcourir (14), la longueur du tronçon suivi (11), des points de repère (12) et des informations secondaires (13), telles que signaux du code de la route ou de prévention routière.

8. Système selon la revendication 6, caractérisé en ce que l'appareil embarqué (2) comporte des voyants orientés (26, 27, 28) représentatifs d'instructions de conduite, commandés par le bouton de progression (5) et de retour en arrière (6), le talon du voyant axial (26) symbolisant le véhicule.

9. Système selon la revendication 6, caractérisé en ce que l'appareil embarqué (2) comporte un écran (29) de représentation du tronçon (30) de voie suivi, représenté dans l'axe du véhicule, et du tronçon (31) de voie ultérieur, avec leurs sécantes, avec recalage des tronçons au fur et à mesure de la progression du véhicule.

10. Système selon la revendication 6, caractérisé en ce que l'appareil embarqué (2) comporte un écran (29) de représentation de l'itinéraire total suivi.

11. Système selon la revendication 6, caractérisé en ce que l'appareil embarqué (2) comporte des écrans (22, 23) de défilement en tambour des noms des voies sécantes, et des noms des voies de départ, d'arrivée, et de repères.

12. Système selon la revendication 9, caractérisé en ce que la commande du bouton de progression et de retour en arrière (5, 6) assure le défilement pas-à-pas ou le retour en arrière des tronçons de voie suivis, sur ledit écran (29).

13. Système selon l'une des revendications 8 à 11, caractérisé en ce que l'appareil embarqué comporte une liaison mécanique au véhicule pour commander le défilement en continu ou par point lumineux de la représentation de l'itinéraire suivi et des informations correspondantes.

14. Système selon la revendication 13, caractérisé en ce que la coordination dudit défilement en continu ou par point lumineux est ajustée au parcours réel du véhicule par compas et mouvement inertiel.

15. Système selon la revendication 1, caractérisé en ce que l'appareil embarqué (2) comporte des boutons de commande (56) dont la manoeuvre assure la transmission visuelle ou phonique des informations générales, commerciales, publicitaires, économiques, touristiques, historiques, municipales ou techniques, correspondant à l'itinéraire suivi et à ses points remarquables, en fonction de la corrélation assurée par l'appareil (40) de relevé, d'identification, de codage, de compactage, de mémorisation et de mise à jour entre ces informations générales et les données cartographiques relatives auxdites voies.

16. Système selon la revendication 1, caractérisé en ce que l'appareil embarqué (2) comporte un programme inclus de détermination, à partir du point de départ et du point d'arrivée définis par l'utilisateur, dans n'importe quelle zone géographique, d'au moins un itinéraire, et de sélection des informations primaires et secondaires et des informations primaires et secondaires et des informations générales, enregistrées dans les supports à mémoire (1, 1a), correspondant à cet itinéraire.

## Patentansprüche

1. Elektronisches Leit- und Informationssystem für den Strassenverkehr des Typs, der aufweist :
- Datenträger (1, 1a) zur Aufnahme von kartographischen Daten und allgemeinen Informationen,
- sowie ein im Fahrzeug mitgeführtes elektronisches Gerät (2) zur Verarbeitung und Visualisierung der Information, das zur Aufnahme der genannten Datenträger (1, 1a) geeignet ist und aufweist : ein Steuertastatur (4), einen Sichtschirm (29), eine Eingabetaste (5) mit manueller Bestätigung, die in der Lage ist, durch ein in das Gerät eingebautes Programm einen Weg zwischen durch die Tastatur bestimmten Ausgangs- und Ankunftspunkten zu wählen und dazu, visuell oder akustisch nach jedem Steuerungsvorgang der Eingabetaste (5) angaben abzugeben, die notwendig sind, um das Einhalten des gewählten Weges sicherzustellen, dadurch gekennzeichnet, dass es ausserdem aufweist :
- ein Gerät (40) zur Erfassung, Identifizierung, Kodierung, Verdichtung, Speicherung und Aktualisierung von kartographischen Daten in bezug auf Abschnitte jedes Weges eines Verkehrsbereiches, wie z.B. Verlaut in bezug auf die Nordrichtung, Länge des Weges, Schnittpunkte, Namen, gerade oder ungerade Nummern, Orientierungspunkte wie öffentliche Baudenkmäler, Kirchen, Plätze und allgemeine Wege des Gebietes zuzuordnende Informationen;
- ein Speicherungsgerät (41), das in der Lage ist, die genannten kartographischen Daten und/oder allgemeinen Informationen auf den genannten Datenträger (1, 1a) abzugeben;
- und dadurch gekennzeichnet, dass das an Bord des Fahrzeuges befindliche elektronische Gerät ausgehend von den kartographischen Daten und allgemeinen Informationen, die von dem Gerät (40) zur Erfassung, Identifierung, Kodierung, Verdichtung, Speicherung und Aktualisierung erfasst und vom Speichergerät (41) an die genannten Datenträger (1, 1a) mittels Wiedergabe übertragt wurden, eine sich von dem Ausgangspunkt bis zu dem Zielpunkt erstreckende Fahrstrecke durch eine Folge von jeweils einem Stück des Strassenverkehrsweg entsprechenden Wegabschnitten definiert, wobei diese Ausgangs- und Zielpunkte über die Tastatur (4) definiert wurden;
und dadurch, dass
das an Bord des Fahrzeuges befindliche elektronische Gerät den jeweils gefolgten Abschnitt und den nächsten Abschnitt darstellt, wobei der jeweils gefolgte Abschnitt in der Achse des Fahrzeuges dargestellt wird,
und dadurch, dass
nach jeder Betätigung der Eingabetaste (5) am Ende des jeweils gefolgten Abschnitt, gibt das an Bord des Fahrzeuges befindliche elektronische Gerät visuellen oder akustischen Leitinformationen bezüglich der zu ergreifenden Massnahmen um den nächsten Abschnitt zu befahren, ab.

2. System nach Anspruch 1, dadurch gekennzeichnet, daß das Gerät (40) zur Erfassung, Identifizierung, Kodierung, Verdichtung, Speicherung und Aktualisierung aufweist: einen empfindlichen Bildschirm oder Bildschirm mit hoher Auflösung (32), auf dem eine Karte eines Verkehrsgebietes dargestellt ist; eine Tastatur zur Identifizierung der auf dem Bildschirm erscheinenden Wege; und elektronische Mittel zur Erfassung der Kenndaten jedes einzelnen dieser Wege, wie Ausrichtung in bezug auf Norden, Länge der verschiedenen Abschnitte, Breite, Schnittpunkte, Name, zugelassene Fahrtrichtung und besondere Bezugspunkte; so daß die Kodierung und die Speicherung der kartographischen Daten für jeden Weg der genannten Zone sichergestellt wird.

3. System nach Anspruch 2, dadurch gekennzeichnet, daß das Gerät (40) zur Erfassung, Identifizierung, Kodierung, Verdichtung, Speicherung und Aktualisierung außerdem aufweist: Speicher (43, 44) für die Aufzeichnung von allgemeinen, kommerziellen, werblichen, wirtschaftlichen, touristischen, historischen, gemeindlichen oder technischen Daten im Zusammenhang mit den genannten Fahrwegen und Mittel zur Korrelierung (45, 46, 47) zwischen diesen allgemeinen Informationen und den kartographischen Daten über die genannten Wege.

4. System nach Anspruch 1, dadurch gekennzeichnet, daß das Speichergerät (41) aufweist: Speicher zur Speicherung der kartographischen Daten und der allgemeinen Informationen aus dem Gerät (40) zur Erfassung, Identifizierung, Kodierung, Verdichtung, Speicherung und Aktualisierung; Mittel (49, 50) zur Aufnahme einer Vorauszahlung; Mittel (51, 52) für die Auswahl der kartographischen Daten und der allgemeinen Informationen, die zu liefern sind; elektronische Mittel zur Einbringung der ausgewählten kartographischen Daten und allgemeinen Informationen auf Speicherträger und Mittel (54) zur Verteilung der genannten Datenträger, die entsprechend geladen wurden.

5. System nach Anspruch 1, dadurch gekennzeichnet, daß die Datenträger (1, 1a) aus Speicherkarten und eventuell aus Mikroprozessorkarten, umwickelten Blöcken, Magnetbändern oder Platten bestehen, die durch das Speichergerät (41) erneut geladen werden können.

6. System nach Anspruch 1, dadurch gekennzeichnet, daß das im Fahrzeug mitgeführte elektronische Gerät (2) für die Bearbeitung und Visualisierung der Information Bildschirme für die Klarschriftangabe des Ausgangsweges (8), des Zielweges (9), des einzuhaltenen Fahrweges (10), des weiteren Weges, der Zwischenbezugspunkte (12) und der linksliegenden kreuzenden Wege (22) bzw. rechtsliegenden kreuzenden Wege (23) und ihres Ranges (24, 25) aufweist.

7. System nach Anspruch 6, dadurch gekennzeichnet, daß das im Fahrzeug mitgeführte Gerät (2) außerdem Bildschirme für das Anzeigen von Primärinformation, Wie z.B. Länge des Weges (15), verbleibende Entfernung (14), Länge das derzeit befahrenen Abschnittes (11), Bezugspunkte (12) und Sekundärinformation (13), wie z.B. Verkehrs- oder Warnzeichen, aufweist.

8. System nach Anspruch 6, dadurch gekennzeichnet, daß das im Fahrzeug mitgeführte Gerät (2) Richtungskontrolllampen (26, 27, 28) aufweist, die für Fahranweisungen stehen, die durch die Eingabetaste (5) und die Rücktaste (6) gekennzeichnet wird, wobei der untere Teil der Axialkontrolleuchte (26) das Fahrzeug symbolisiert.

9. System nach Anspruch 6, dadurch gekennzeichent, daß das im Fahrzeug mitgeführte Gerät (2) einen Bildschirm (29) zur Darstellung des Abschnittes (30) des befahrenen Wegabschnittes, der in der Achse des Fahrzeuges dargestellt wird, und des darauffolgenden Wegabschnittes (31) mit den Querstraßen und mit einer Weiterführung der Abschnitte entsprechend dem Vorankommen es Fahrzeuges aufweist.

10. System nach Anspruch 6, dadurch gekennzeichnet, daß das im Fahrzeug mitgeführte Gerät (2) einen Bildschirm (29) zur Darstellung des gesamten eingehaltenen Fahrweges aufweist.

11. System nach Anspruch 6, dadurch gekennzeichnet, daß das im Fahrzeug mitgeführte Gerät (2) Bildschirme (22, 23) aufweist, auf denen in Trommelform die Namen der Querstraßen und die Namen der Ausgangs- und Zielstraße und der Bezugspunkte vorbeilaufen.

12. System nach Anspruch 9, dadurch gekennzeichnet, daß die Betätigung der Eingabe- und Rücktaste (5, 6) ein schrittweises Vorbeilaufen oder einen Rücklauf der befahrenen Fahrwegabschnitte auf dem genannten Bildschirm (29) sicherstellt.

13. System nach einem der Ansprüche 8 bis 11, dadurch gekennzeichnet, daß das im Fahrzeug mitgeführte Gerät eine mechanische Verbindung zum Fahrzeug aufweist, um das kontinuierliche oder lichtpunktförmige Ablaufen der Darstellung des eingehaltenen Fahrweges und der entsprechenden Informationen zu steuern.

14. System nach Anspruch 13, dadurch gekennzeichnet, daß die Koordinierung des genannten kontinuierlichen oder lichtpunktförmigen Ablaufens mit dem tatsächlichen Fahrweg des Fahrzeuges durch Kompaß und Trägheitsbewegung sichergestellt wird.

15. System nach Anspruch 1, dadurch gekennzeichnet, daß das im Fahrzeug mitgeführte Gerät (2) Steuerknöpfe (56) aufweist, deren Betätigung die visuelle oder akustische Übermittlung von allgemeinen, kommerziellen, werblichen, wirtschaftlichen, touristischen, historischen, gemeindlichen oder technischen Informationen entsprechend dem eingehaltenen Fahrweg und seinen bemerkenswerten Punkten als Funktion der Korrelation sicherstellt, die durch das Gerät (40) zur Erfassung, Identifizierung, Kodierung, Verdichtung, Speicherung und Aktualisierung zwischen der allgemeinen Informationen und kartographischen Daten bezüglich der genannten Wege hergestellt wird.

16. System nach Anspruch 1, dadurch gekennzeichnet, daß das im Fahrzeug mitgeführte Gerät (2) ein eingebautes Programm aufweist, um ausgehend von den durch den Benutzer definierten Start- und Zielpunkten in jedem beliebigen geographischen Bereich mindestens einen Fahrweg zu bestimmen und die diesem Fahrweg entsprechenden, auf den Datenträgern (1, 1a) aufgezeichneten primären und sekundären sowie allgemeinen Informationen auszuwählen.

## Claims

1. Electronic guidance and information system for traffic, or the type comprising :
- storage media (1, 1a) for receiving cartographic data and general information ;
- and an onboard electronic apparatus (2) for the processing and display of the information, which is capable of receiving said storage media (1, 1a), comprising : a control keyboard (4), a display screen (29), a manually operated progress button (5), and able, by means of a program included in the apparatus, to choose an itinerary between a departure point and an arrival point defined by means of the keyboard (4), and to give, visually or phonically, after each progress button (5) command, indications to ensure the guidance on the itinerary chosen, characterized in that it comprises :
- a reading, identifying, coding, compression, storage and updating apparatus (40) for cartographic data relating to each of the sections of each of the roads in a traffic zone, such as orientation with respect to the North, road length, intersection points, names, odd or even numbers, reference points such as public monuments, churches, squares, and general information relating to roads of said zone ;
- a storage apparatus (41) which is capable of supplying said cartographic data and/or general information on said storage media (1, 1a) ;
- and characterized in that, starting with the cartographic data and the general information read by the reading, identifying, coding, compression, storage and updating apparatus (40), and assigned by the storage apparatus (41) by reproduction on said storage media (1, 1a), the onboard electronic apparatus defines through a succession of sections each corresponding to a portion of a traffic road, an itinerary from the departure point to the arrival point, said departure and arrival points being defined by means of the keyboard (4) ; and in that the onboard electronic apparatus carries out representation of both the section of the road being followed and the subsequent section of road, the section of the road being followed being displayed in the axis of the vehicle, and in that, after each progress button (5) command, executed at the end of the section of the road being followed, the onboard electronic apparatus gives visual or phonic guidance indications related to the action to be taken in order to enter the subsequent section of road.

2. System according to claim 1, characterised in that the reading, identifying, coding, compression, storage and updating apparatus (40) for cartographic data comprises : a sensitive screen (42) on which is shown a map of a traffic zone ; a keyboard for identifying the roads appearing on the screen, and electronic means for reading the features of each of said roads, such as the orientation relative to the North, the length of the different sections, the width, intersection points, names, authorised direction and particular reference points, in such a way as to ensure the coding and the storage of the cartographic data relating to each road of said zone.

3. System according to Claim 2, characterised in that the reading, identifying, coding, compression, storage and updating apparatus (40) comprises in addition: memory stores (43, 44) for recording general, commercial, advertising, economic, tourist, historical, municipal or technical information relating to said roads; and means (45, 46, 47) for correlation between said general information and the cartographic data relating to said roads.

4. System according to Claim 1, characterised in that the storage apparatus (41) comprises: memory stores for storing the cartographic data and the general information from the reading, identifying, coding, compression, storage and updating apparatus (40); means (49, 50) for receiving coins in payment; means (51, 52) for selecting the cartographic data and the general information to be supplied; electronic means for loading the cartographic data and selected general information on the storage media; and means (54) for distributing said storage media thus loaded.

5. System according to Claim 1, characterised in that the storage media (1, 1a) are formed by memory cards, and possibly microprocessor cards, solid state chips, magnetic tapes or discs, which are able to be reloaded by the storage apparatus (41).

6. System according to Claim 1, characterised in that the onboard electronic apparatus (2) for processing and displaying the information comprises screens for indicating in clear the departure road (8), the destination road (9), the road being followed (10), the subsequent road, intermediate reference points (12) and intersecting roads on the left (22) and on the right (23) and their ranking (24, 25).

7. System according to Claim 6, characterised in that the onboard apparatus (2) also comprises screens for displaying primary information such as the length of journey (15), the distance remaining to be covered (14), the length of the section followed (11), reference points (12) and secondary information (13), such as highway code signals or road safety signals.

8. System according to Claim 6, characterised in that the onboard apparatus (2) comprises directional signal lights (26, 27, 28) representing driving instructions, controlled by the progress button (5) and reversal button (6), the pillar of axial light (26) symbolising the vehicle.

9. System according to Claim 6, characterised in that the onboard apparatus (2) comprises a screen (29) for showing the section (30) of road followed, shown in the axis of the vehicle, and of the subsequent section (31) of road, with their intersections, with re-setting of the sections as the vehicle progresses.

10. System according to Claim 6, characterised in that the onboard apparatus (2) comprises a screen (29) for showing the whole itinerary followed.

11. System according to Claim 6, characterised in that the onboard apparatus (2) comprises screens (22, 23) for scrolling the names of the intersecting roads, and the names of the departure, arrival and reference roads.

12. System according to Claim 9, characterised in that control of the progress button and reversal button (5, 6) provides the step-by-step scrolling or the reversal of the sections of road followed, on said screen (29).

13. System according to one of Claims 8 to 11, characterised in that the onboard apparatus comprises a mechanical connection to the vehicle in order to drive the continuous scrolling or scrolling by luminous dot of the representation of the itinerary followed and the corresponding information.

14. System according to Claim 13, characterised in that the coordination of said continuous scrolling or scrolling by luminous dot is adjusted to the real route of the vehicle by compass and inertial movement.

15. System according to Claim 1, characterised in that the onboard apparatus (2) comprises control buttons (56), the operation of which provides the visual or phonic transmission of the general, commercial, advertising, economic, tourist, historical, municipal or technical information corresponding to the itinerary followed and to its notable points, as a function of the correlation provided by the reading, identifying, coding, compression, storage and updating apparatus (40) between said general information and the cartographic data relating to said roads.

16. System according to Claim 1, characterised in that the onboard apparatus (2) comprises an included program for determining, from the departure point and from the arrival point defined by the user and in any geographical zone whatsoever, at least one itinerary, and for selecting the primary and secondary information and the general information recorded in the storage media (1, 1a), corresponding to said itinerary.
